# EUROPÄISCHE PATENTANMELDUNG

(11) **EP 1 783 590 A2**
(43) Veröffentlichungstag der Anmeldung: **09.05.2007**
(21) Anmeldenummer: 06017954.6
(22) Anmeldetag: 29.08.2006
(51) Int. Cl.: G06F 3/033

(54) **Eingabevorrichtung für ein Kraftfahrzeug**

(30) Priorität: 05.10.2005 DE 102005047648
(71) Anmelder: Volkswagen Aktiengesellschaft, 38436 Wolfsburg (DE)
(72) Erfinder: Medler, Andreas, 38268 Lengede (DE); Wehling, Ulrike, 38104 Braunschweig (DE); Pollex, Alf, 38300 Wolfenbüttel (DE); Göhler, Dino, 13409 Berlin (DE); Michaelis, Jan, 10963 Berlin (DE); Dehmann, Rainer, 10963 Berlin (DE); Han, Kyoung Sun, 10825 Berlin (DE)

(57) **Zusammenfassung**

Die Erfindung betrifft eine Eingabevorrichtung (2), insbesondere für ein Kraftfahrzeug (1), wobei die Eingabevorrichtung (2) ein Display zur Darstellung veränderlicher Informationen (11, 15, 16, 20, 21, 26, 29) und einen über dem Display angeordneten Touchscreen zur Eingabe von Befehlen durch Berühren des Touchscreens umfasst, und wobei die Eingabevorrichtung (2) eine Steuerung (10) zur Erzeugung einer auf dem Display darstellbaren Auswahlmarkierung (21) und zum Verschieben der mittels des Displays dargestellten Auswahlmarkierung (21) entsprechend einer berührenden Bewegung über den Touchscreen umfasst.

## Beschreibung

Die Erfindung betrifft eine Eingabevorrichtung, insbesondere für ein Kraftfahrzeug, wobei die Eingabevorrichtung ein Display zur Darstellung veränderlicher Informationen, insbesondere zur Darstellung einer Karte, und einen über dem Display angeordneten Touchscreen zur Eingabe von Befehlen durch Berühren des Touchscreens oder durch Drücken auf den Touchscreen umfasst.

Ein Touchscreen ist z.B. aus der DE 201 02 197 U1 bekannt. In der DE 201 02 197 U1 ist ein Touchscreen zur Visualisierung von elektronischen Signalen und einer bestätigenden Berührungseingabe von Zeichen und Symbolen bestehend aus einer Funktionsebene zur Visualisierung und Tasteingabe und einer hierzu korrespondierenden, höher gelegenen, punktuell deformierbaren Schutzebene offenbart. Dabei wird bei einer Auswahl bestimmter Punkte der Funktionsebene mittels Berührung über die Schutzebene hinweg mindestens ein Bestätigungssignal für den Tastsinn (haptischer Reiz) des Benutzers wahrnehmbar an der Position des Berührungspunktes in der deformierten Schutzebene erzeugt und das Bestätigungssignal für den Tastsinn (haptischer Reiz) durch exzentrisch, inner- und/oder unterhalb der Funktionsebene angeordnete Schwingungselemente erzeugt. Zudem erfolgt bei dem aus der DE 201 02 197 U1 bekannten Touchscreen die Weiterleitung der erzeugten Schwingungen von der Funktions- auf die Schutzebene durch direkten Kontakt der beiden Ebenen und/oder über die Randbereiche der Ebenen durch starre oder elastische Verbindungselemente.

Es ist Aufgabe der Erfindung, eine Eingabevorrichtung, insbesondere für ein Kraftfahrzeug, zu verbessern. Dabei ist es insbesondere wünschenswert, die Bedienung eines Navigationssystems eines Kraftfahrzeuges zu verbessern.

Vorgenannte Aufgabe wird durch eine Eingabevorrichtung, insbesondere für ein Kraftfahrzeug, gelöst, wobei die Eingabevorrichtung ein Display zur Darstellung veränderlicher Informationen und einen über dem Display angeordneten Touchscreen zur Eingabe von Befehlen durch Berühren des Touchscreens umfasst, und wobei die Eingabevorrichtung eine Steuerung zur Erzeugung einer auf dem Display darstellbaren Auswahlmarkierung und zum Verschieben der mittels des Displays dargestellten Auswahlmarkierung entsprechend einer berührenden Bewegung über den Touchscreen umfasst. Eine Berührung des Touchscreens kann im Sinne der Erfindung auch oder nur ein Drücken auf den Touchscreen sein.

Es kann vorgesehen sein, dass ein Touchscreen auch zur optischen Darstellung von Informationen ausgebildet ist, also einen Touchscreen und ein Display im Sinne der Ansprüche umfasst. Entsprechend dieser Definition eines Touchscreens muss kein weiteres Display im Sinne der Ansprüche vorgesehen werden, vielmehr umfasst ein Touchscreen im Sinne dieser Definition bereits ein Display im Sinne der Ansprüche.

In vorteilhafter Ausgestaltung der Erfindung ist die Auswahlmarkierung nur dann verschiebbar, wenn die berührende Bewegung ihren Ausgang im Bereich der Auswahlmarkierung nimmt oder durch die Auswahlmarkierung verläuft. Dabei ist insbesondere vorgesehen, dass die Auswahlmarkierung nur entsprechend der berührenden Bewegung nach Durchlaufen des Bereichs der Auswahlmarkierung bewegt wird.

In weiterhin vorteilhafter Ausgestaltung der Erfindung ist mittels des Displays ein Bedienelement zum Aufruf der Auswahlmarkierung darstellbar.

In weiterhin vorteilhafter Ausgestaltung der Erfindung umfasst die Auswahlmarkierung ein Kreuz, ein Fadenkreuz, einen Kreis, einen Ring, einen Pfeil und/oder einen Zeiger oder besteht aus einem Kreuz, einem Fadenkreuz, einem Kreis, einem Ring, einem Pfeil oder einem Zeiger.

In weiterhin vorteilhafter Ausgestaltung der Erfindung weist die Eingabevorrichtung einen Aktor zur Auslenkung des Touchscreens, wenn die Auswahlmarkierung eine vorbestimmte Position erreicht und/oder eine vorbestimmte Entfernung bewegt wird, auf. Dabei ist insbesondere vorgesehen, dass der Aktor mittels der Steuerung zur Auslenkung des Touchscreens ansteuerbar ist. Die Auslenkung wird in vorteilhafter Ausgestaltung der Erfindung nach einer bestimmten Zeit, insbesondere nach 20 ms bis 200 ms, beendet. Eine vorbestimmte Position kann z.B. eine Ortschaft, eine Straße, ein Gebäude und/oder ein POI (= point of interest) sein. Bei Auslenkung des Touchscreens, wenn die Auswahlmarkierung eine vorbestimmte Entfernung bewegt wird, ist insbesondere vorgesehen, dass der Touchscreen erneut ausgelenkt wird oder auslenkbar ist, wenn die Auswahlmarkierung das im Wesentliche ganzzahlige Vielfache der vorbestimmten Entfernung bewegt wird. Ist z.B. eine Auslenkung nach 3 mm (als bestimmter Entfernung) vorgesehen, so erfolgt in diesem Falle auch eine Auslenkung nach 6 mm, nach 9 mm, nach 12 mm, nach 15 mm usw..

Vorgenannte Aufgabe wird zudem durch ein Navigationssystem für ein Kraftfahrzeug mit einer vorgenannten Eingabevorrichtung gelöst. Dabei umfasst die auf dem Display darstellbare Information vorteilhafterweise eine Karte oder einen Kartenausschnitt.

Vorgenannte Aufgabe wird zudem durch ein Verfahren zum Betrieb einer, insbesondere eines oder mehrere der vorgenannten Merkmale umfassenden, Eingabevorrichtung gelöst, wobei die Eingabevorrichtung ein Display zur Darstellung veränderlicher Informationen und einen über dem Display angeordneten Touchscreen zur Eingabe von Befehlen durch Berühren des Touchscreens umfasst, wobei mittels des Displays eine Auswahlmarkierung dargestellt wird, und wobei die mittels des Displays dargestellte Auswahlmarkierung entsprechend einer berührenden Bewegung über den Touchscreen bewegt wird.

In vorteilhafter Ausgestaltung der Erfindung wird die Auswahlmarkierung nur dann verschoben, wenn die berührende Bewegung ihren Ausgang im Bereich der Auswahlmarkierung nimmt oder durch die Auswahlmarkierung verläuft.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: eine Innenansicht eines Kraftfahrzeuges,
- Fig. 2: eine Eingabevorrichtung mit einer Steuerung,
- Fig. 3: ein in der Steuerung gemäß Fig. 2 implementiertes Verfahren,
- Fig. 4: die Eingabevorrichtung gemäß Fig. 2,
- Fig. 5: die Eingabevorrichtung gemäß Fig. 2,
- Fig. 6: die Eingabevorrichtung gemäß Fig. 2,
- Fig. 7: ein Ausführungsbeispiel einer Auswahlmarkierung,
- Fig. 8: ein weiteres Ausführungsbeispiel einer Auswahlmarkierung,
- Fig. 9: ein weiteres Ausführungsbeispiel einer Auswahlmarkierung,
- Fig. 10: ein weiteres Ausführungsbeispiel einer Auswahlmarkierung,
- Fig. 11: ein weiteres Ausführungsbeispiel einer Auswahlmarkierung,
- Fig. 12: ein weiteres Ausführungsbeispiel einer Auswahlmarkierung,
- Fig. 13: ein weiteres Ausführungsbeispiel einer Auswahlmarkierung,
- Fig. 14: ein weiteres Ausführungsbeispiel einer Auswahlmarkierung,
- Fig. 15: ein weiteres Ausführungsbeispiel einer Auswahlmarkierung und

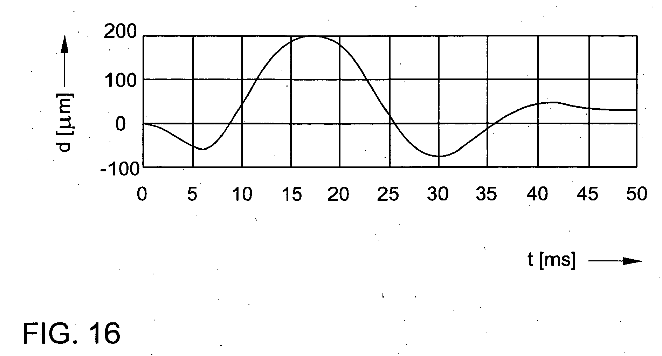

- Fig. 16: eine Auslenkung eines Touchscreens.

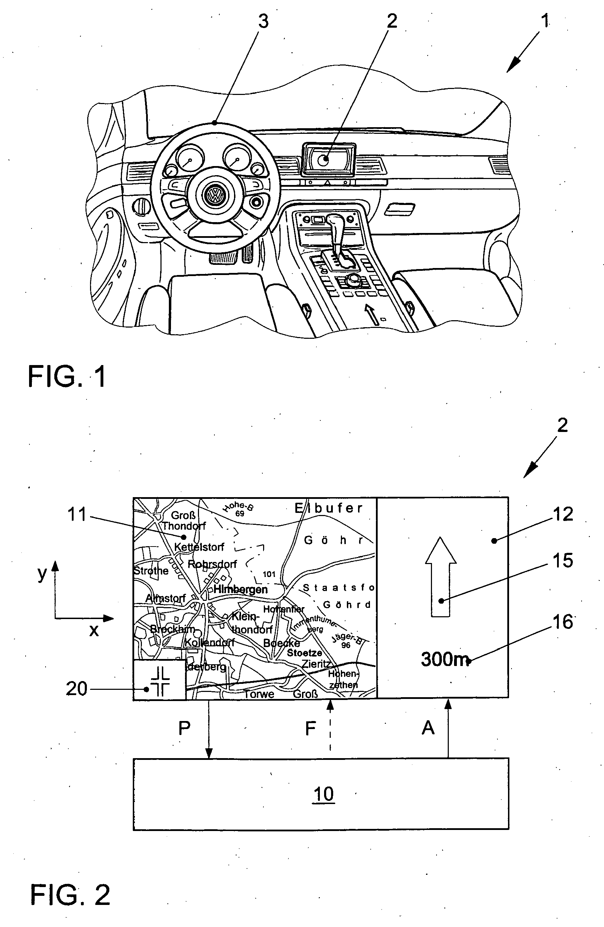

Fig. 1 zeigt eine Innenansicht eines mit Bezugszeichen 1 bezeichneten Kraftfahrzeuges. Das Kraftfahrzeug 1 umfasst eine Eingabevorrichtung 2 mit einem Display zur Darstellung veränderlicher Informationen, insbesondere zur Darstellung einer Karte, und mit einem über dem Display angeordneten Touchscreen zur Eingabe von Befehlen durch Berühren des Touchscreens oder durch Drücken auf den Touchscreen. In Fig. 2 stellt das Display eine Bedienmaske für ein Navigationssystem dar. Diese beispielhafte Bedienmaske umfasst eine Karte 11, einen Bereich 12 mit Navigationssymbolen 15 und 16 sowie ein Bedienelement 20 zum Aufruf einer Auswahlmarkierung. Die Eingabevorrichtung 2 kann auch in ein in Fig. 1 dargestelltes Lenkrad 3 integriert sein.

Die Eingabevorrichtung 2 umfasst eine Steuerung 10 zur Steuerung der Eingabevorrichtung 2. Dazu ist vorgesehen, dass die Steuerung 10 ein Anzeigesignal A zur Erzeugung einer gewünschten Darstellung der veränderlichen Informationen, wie z.B. der Karte 11, den Navigationssymbolen 15 und 16 oder dem Bedienelement 20, auf dem Display an das Display ausgibt. Zudem liest die Steuerung 10 ein Positionssignal P ein, dass die Koordinaten x und y einer Berührung des Touchscreens (oder eines Drückens auf den Touchscreen) angibt.

Es kann vorgesehen sein, dass die Eingabevorrichtung 2 zur Ausgabe eines haptischen Feedbacks ausgestaltet ist, wie es z.B. in der EP 1 560 102 A1 offenbart ist. In diesem Fall ist vorgesehen, dass die Steuerung 10 ein Kraftsteuersignal F an einen Aktor zur Erzeugung des haptischen Feedbacks ausgibt.

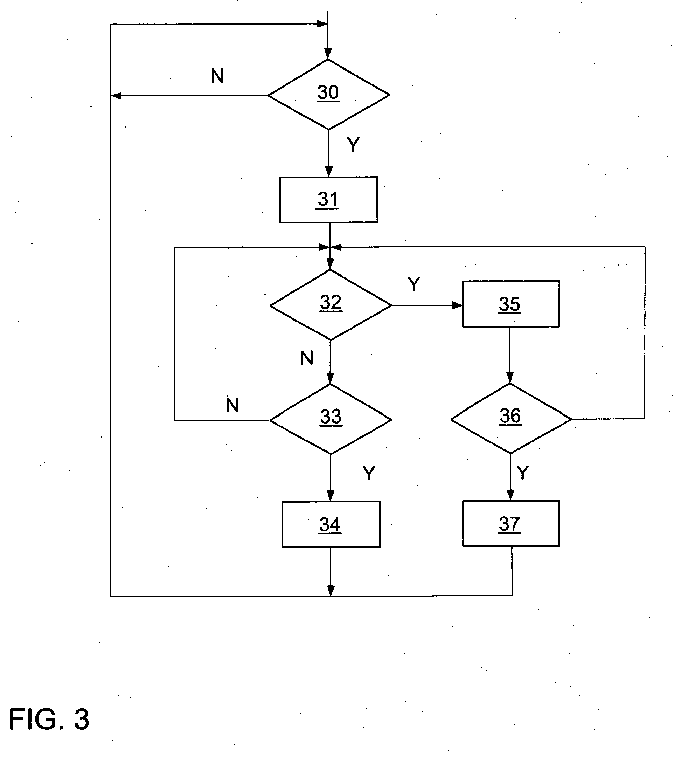

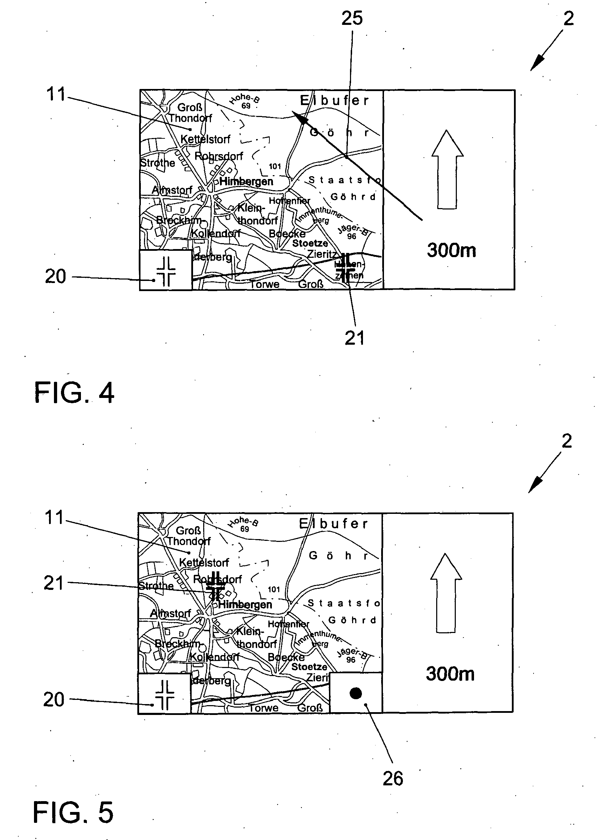

Fig. 3 zeigt ein in der Steuerung 10 implementiertes - unter Bezugnahme auf Fig. 2, Fig. 4, Fig. 5 und Fig. 6 erläutertes - Verfahren, gemäß dem eine mittels des Displays dargestellte Auswahlmarkierung 21 entsprechend einer berührenden Bewegung über den Touchscreen bewegt wird. Das Verfahren beginnt mit einer Abfrage 30, ob der Touchscreen im Bereich des Bedienelementes 20 berührt worden ist. Ist der Touchscreen im Bereich des Bedienelementes 20 berührt worden, wird - wie in Fig. 4 beispielhaft dargestellt - in einem Schritt 31 eine Auswahlmarkierung 21 erzeugt bzw. dargestellt. Andernfalls wird die Abfrage 30 wiederholt.

Dem Schritt 31 folgt eine Abfrage 32, ob eine berührende Bewegung über den Touchscreen erfolgt. Erfolgt keine berührende Bewegung über den Touchscreen, so folgt der Abfrage 32 eine Abfrage 33, ob der Touchscreen im Bereich des Bedienelementes 20 berührt worden ist. Ist der Touchscreen im Bereich des Bedienelementes 20 berührt worden, wird die Auswahlmarkierung 21 in einem Schritt 34 entfernt. Dem Schritt 34 folgt die Abfrage 30.

Ist der Touchscreen nicht im Bereich des Bedienelementes 20 berührt worden, folgt der Abfrage 33 die Abfrage 32, ob eine berührende Bewegung über den Touchscreen erfolgt ist. Erfolgt eine berührende Bewegung über den Touchscreen, wie sie z.B. in Fig. 4 durch einen mit Bezugszeichen 25 bezeichneten Pfeil symbolisiert ist, so folgt der Abfrage 32 ein Schritt 35, in dem die mittels des Displays dargestellte Auswahlmarkierung 21 - wie in Fig. 5 dargestellt - entsprechend einer berührenden Bewegung über den Touchscreen bewegt wird und in dem ein Bedienelement 26 zur Auswahl eines mittels der Auswahlmarkierung 21 markierten Zieles dargestellt wird. Gemäß dem Beispiel in Fig. 4 wird die Auswahlmarkierung 21 entsprechend einer berührenden Bewegung über den Touchscreen bewegt unabhängig von dem Ort dieser Berührung. In einer anderen Ausgestaltung ist die Auswahlmarkierung 21 nur dann verschiebbar, wenn die berührende Bewegung ihren Ausgang im Bereich der Auswahlmarkierung 21 nimmt oder durch die Auswahlmarkierung 21 verläuft. Gemäß letzterer Ausgestaltung ist insbesondere vorgesehen, dass die Auswahlmarkierung 21 nur entsprechend der berührenden Bewegung nach Durchlaufen des Bereichs der Auswahlmarkierung 21 bewegt wird.

Dem Schritt 35 folgt eine Abfrage 36, ob der Touchscreen im Bereich des Bedienelementes 26 berührt worden ist. Ist der Touchscreen im Bereich des Bedienelementes 26 berührt worden, wird ein mittels der Auswahlmarkierung 21 markiertes Ziel in einem Schritt 37 ausgewählt und die Auswahlmarkierung 21 und das Bedienelement 26 entfernt. Dem Schritt 37 folgt die Abfrage 30. Ist der Touchscreen dagegen nicht im Bereich des Bedienelementes 26 berührt worden, so folgt der Abfrage 36 die Abfrage 32.

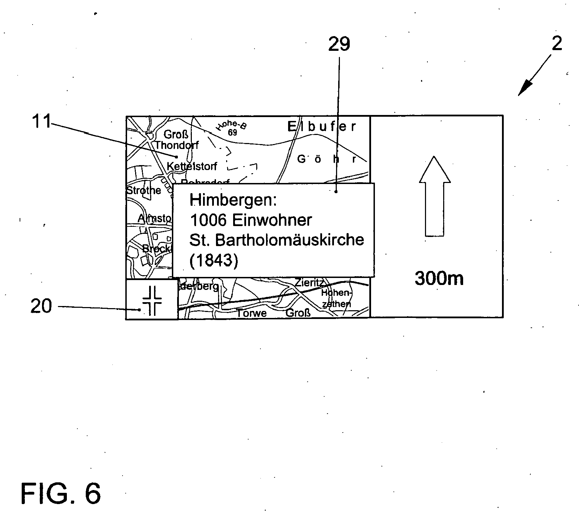

Die Auswahl eines mittels der Auswahlmarkierung 21 markierten Zieles kann z.B. bedeuten, dass dieses Ziel als Ausgangs- oder Endpunkt einer Route eingegeben wird. Die Auswahl eines mittels der Auswahlmarkierung 21 markierten Zieles kann jedoch z.B. zusätzlich oder alternativ auch bedeuten, dass Informationen in Bezug auf dieses Ziel ausgegeben werden. Dies kann z.B. - wie in Fig. 6 dargestellt - mittels eines eingeblendeten Informationsfeldes 29 erfolgen.

Das unter Bezugnahme auf Fig. 3 beschriebene Verfahren ist nur ein Beispiel. Es kann auch vorgesehen sein, dass die Auswahlmarkierung 21 immer dann automatisch eingeblendet wird, wenn diese Funktion angeboten wird. Es kann auch vorgesehen sein, dass die Auswahl eines mittels der Auswahlmarkierung 21 markierten Zieles durch eine Berührung der Auswahlmarkierung 21, insbesondere eine länger als ein Grenzwert andauernde Berührung der der Auswahlmarkierung 21, erfolgen kann bzw. erfolgt.

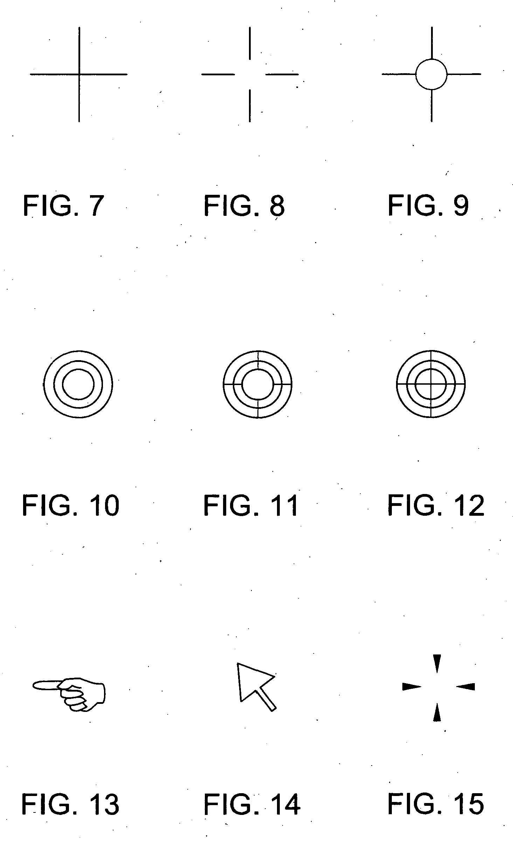

Die Auswahlmarkierung 21 kann - wie in Fig. 2, Fig. 4, Fig. 5 und Fig. 6 dargestellt - als Kreuz ausgestaltet sein. In alternativen Ausgestaltungen umfasst die Auswahlmarkierung ein Fadenkreuz, einen Kreis, einen Ring, einen Pfeil und/oder einen Zeiger oder besteht aus einem Fadenkreuz, einem Kreis, einem Ring, einem Pfeil oder einem Zeiger. Fig. 7, Fig. 8, Fig. 9, Fig. 10, Fig. 11, Fig. 12, Fig. 13, Fig. 14 und Fig. 15 zeigen mögliche Ausgestaltungen einer Auswahlmarkierung. Es kann vorgesehen sein, dass ein Bediener zwischen unterschiedlichen Ausgestaltungen einer Auswahlmarkierung wählen kann.

In einer Ausgestaltung weist die Eingabevorrichtung 2 einen Aktor zur Auslenkung des Touchscreens, wenn die Auswahlmarkierung eine vorbestimmte Position erreicht und/oder eine vorbestimmte Entfernung bewegt wird, auf. Dabei ist insbesondere vorgesehen, dass der Aktor mittels der Steuerung 10 zur Auslenkung des Touchscreens - z.B. wie in Fig. 15 dargestellt - ansteuerbar ist, wobei d die Auslenkung in x-Richtung und t die Zeit bezeichnet.

### Bezugszeichenliste

- 1: Kraftfahrzeug
- 2: Eingabevorrichtung
- 3: Lenkrad
- 10: Eingabesteuerung
- 11: Karte
- 12: Bereich
- 15, 16: Navigationssymbol
- 20, 26: Bedienelement
- 21: Auswahlmarkierung
- 25: Pfeil
- 29: Informationsfeld
- 30, 32, 33, 36: Abfrage
- 31, 33, 34, 35, 37: Schritt

- A: Anzeigesignal
- d: Auslenkung eines Touchscreens
- F: Kraftsteuersignal
- P: Positionssignal
- t: Zeit
- x, y: Koordinate

## Patentansprüche

1. Eingabevorrichtung (2), insbesondere für ein Kraftfahrzeug (1), wobei die Eingabevorrichtung (2) ein Display zur Darstellung veränderlicher Informationen (11, 15, 16, 20, 21, 26, 29) und einen über dem Display angeordneten Touchscreen zur Eingabe von Befehlen durch Berühren des Touchscreens umfasst, **dadurch gekennzeichnet, dass** die Eingabevorrichtung (2) eine Steuerung (10) zur Erzeugung einer auf dem Display darstellbaren Auswahlmarkierung (21) und zum Verschieben der mittels des Displays dargestellten Auswahlmarkierung (21) entsprechend einer berührenden Bewegung über den Touchscreen umfasst.

2. Eingabevorrichtung (2) nach Anspruch 1, **dadurch gekennzeichnet, dass** die Auswahlmarkierung (21) nur dann verschiebbar ist, wenn die berührende Bewegung ihren Ausgang im Bereich der Auswahlmarkierung (21) nimmt oder durch die Auswahlmarkierung (21) verläuft.

3. Eingabevorrichtung (2) nach Anspruch 1 oder 2, **dadurch gekennzeichnet, dass** mittels des Displays ein Bedienelement (20) zum Aufruf der Auswahlmarkierung (21) darstellbar ist.

4. Eingabevorrichtung (2) nach Anspruch 1, 2 oder 3, **dadurch gekennzeichnet, dass** die Auswahlmarkierung (21) ein Kreuz, einen Kreis, einen Ring, einen Pfeil oder einen Zeiger umfasst.

5. Navigationssystem für ein Kraftfahrzeug (1), **dadurch gekennzeichnet, dass** es eine Eingabevorrichtung (2) nach einem der vorhergehenden Ansprüche ausweist.

6. Navigationssystem nach Anspruch 5, **dadurch gekennzeichnet, dass** die auf dem Display darstellbare Information (11, 15, 16, 20, 21, 26, 29) eine Karte (11) oder einen Kartenausschnitt umfasst.

7. Verfahren zum Betrieb einer Eingabevorrichtung (2), insbesondere zum Betrieb einer Eingabevorrichtung (2) nach einem der vorhergehenden Ansprüche, wobei die Eingabevorrichtung (2) ein Display zur Darstellung veränderlicher Informationen (11, 15, 16, 20, 21, 26, 29) und einen über dem Display angeordneten Touchscreen zur Eingabe von Befehlen durch Berühren des Touchscreens umfasst, **dadurch gekennzeichnet, dass** mittels des Displays eine Auswahlmarkierung (21) dargestellt wird, wobei die mittels des Displays dargestellte Auswahlmarkierung (21) entsprechend einer berührenden Bewegung über den Touchscreen bewegt wird.

8. Verfahren nach Anspruch 7, **dadurch gekennzeichnet, dass** die Auswahlmarkierung (21) nur dann verschoben wird, wenn die berührende Bewegung ihren Ausgang im Bereich der Auswahlmarkierung (21) nimmt oder durch die Auswahlmarkierung (21) verläuft.
